(19) Europäisches Patentamt
European Patent Office
Office européen des brevets

(11) **EP 2 395 051 B1**

(12) **EUROPEAN PATENT SPECIFICATION**

(45) Date of publication and mention
of the grant of the patent:
**28.12.2016 Bulletin 2016/52**

(51) Int Cl.:
***C08L 23/16*** *(2006.01)*

(21) Application number: **11004499.7**

(22) Date of filing: **01.06.2011**

(54) **Rubber composition and paper feed roller**

Kautschukzusammensetzung und Papiervorschubrolle

Composition de caoutchouc et rouleau d'alimentation de papier

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2010 JP 2010134220**

(43) Date of publication of application:
**14.12.2011 Bulletin 2011/50**

(73) Proprietor: **Sumitomo Rubber Industries, Ltd.
Hyogo-ken (JP)**

(72) Inventors:
 • **Mine, Akihiro
   Kobe-shi
   Hyogo 651-0072 (JP)**
 • **Nishimori, Hirokazu
   Kobe-shi
   Hyogo 651-0072 (JP)**
 • **Yoshizato, Masahiro
   Kobe-shi
   Hyogo 651-0072 (JP)**
 • **Astoyoshi, Naoyuki
   Kobe-shi
   Hyogo 651-0072 (JP)**

(74) Representative: **Manitz, Finsterwald & Partner
GbR
Postfach 31 02 20
80102 München (DE)**

(56) References cited:
**EP-A2- 0 564 267     JP-A- 2003 261 728
JP-A- 2004 010 322     US-A1- 2006 199 909**

## Description

## BACKGROUND OF THE INVENTION

**Field of the Invention**

The present invention relates to a paper feed roller including a roller body made of the rubber composition.

**Description of Related Art**

For example, the body of a paper feed roller for a laser beam printer is formed by molding a rubber composition containing ethylene propylene diene rubber (may hereinafter be abbreviated as "EPDM") having a high molecular weight and a large content of diene as a rubber component into a roller body and thereafter crosslinking the rubber composition. Sufficient strength, durability can be supplied to the roller body by increasing crosslinking efficiency of the rubber composition.

A crosslinked substance of EPDM having a large content of diene is generally hard, and hence oil is mixed into the rubber composition in a large quantity exceeding 10 parts by mass with respect to 100 parts by mass of the EPDM in general. Thus, proper flexibility can be supplied to the roller body, and the friction coefficient with respect to papers can be increased.

The aforementioned rubber composition can also be applied to the body of a paper feed roller for an inkjet printer, for example.

In recent years, photographs of high quality have increasingly been printed on photographic papers such as glossy papers or semigloss papers with an inkjet printer.

If the photographs are printed with a conventional paper feed roller, however, marks (the so-called roller marks) easily remain on portions of formed images having been in contact with the paper feed roller, to result in defective images.

The roller marks are formed mainly because the large quantity of oil contained in the rubber composition or, if a crosslinking agent (a vulcanizing agent) for the EPDM contains sulfur, the sulfur or a liquid component included in an accelerator, stearic acid (a supplement accelerator) used along with the sulfur easily bleeds on the outer peripheral surface of the paper feed roller, or a solid component contained in the crosslinking agent easily blooms on the outer peripheral surface of the paper feed roller.

Assuming that the oil bleeds on the outer peripheral surface of the paper feed roller, the oil is transferred to a region of a photographic paper in contact with the paper feed roller when printing is started or restarted in a state where the paper feed roller is in contact with the photographic paper. As a result, a water-based inkjet ink is inhibited from smooth infiltration into and fixation to the contact region. Therefore, color concentration and resolution of an image formed on the photographic paper are reduced to selectively reduce and the picture quality in the contact region, to result in a roller mark.

Patent Document 1 (Japanese Unexamined Patent Publication No. 2003-261728) discloses a body of a paper feed roller made of a rubber composition containing not EPDM, but ethylene propylene rubber (may hereinafter be abbreviated as "EPM") as a rubber component. More specifically, the rubber composition described in Patent Document 1 contains EPM having Mooney viscosity (at 100°C) of 35 to 75, along with 3 to 20 parts by mass of a filler and 2.5 to 4 parts by mass of a peroxide crosslinking agent with respect to 100 parts by mass of the EPM.

According to the invention described in Patent Document 1, the EPM having the Mooney viscosity of 35 to 75 to be relatively flexible itself is employed, whereby addition of oil can be omitted. Further, the peroxide crosslinking agent is employed as a crosslinking agent, whereby addition of sulfur and an accelerator, a supplement accelerator therefor can be omitted. Consequently, formation of defective images caused by roller marks resulting from bleeding or blooming of the components can be suppressed.

However, the EPM has lower crosslinking efficiency as compared with the EPDM. In order to supply proper strength, durability etc. to the roller body made of the EPM, therefore, the filler must be mixed into the rubber composition in a large quantity exceeding 10 parts by mass with respect to 100 parts by mass of the EPM as described in Example of Patent Document 1, for example. As a result, the aforementioned effects of rendering the addition of oil unnecessary and supplying proper flexibility to the roller body are canceled by the addition of the large quantity of filler. Therefore, an effect of improving the friction coefficient of the roller body with respect to papers is disadvantageously insufficient.

For example, Patent Document 2 (Japanese Unexamined Patent Publication No. 2004-10322) or the like discloses that addition of sulfur and an accelerator, a supplement accelerator etc. therefor can be omitted also in a system containing EPDM as a rubber component by employing a peroxide crosslinking agent as a crosslinking agent.

EP 0 564 267 A2 relates to an elastomer composition for light-resistant covering materials obtainable by partially crosslinking a mixture comprising (A) 100 parts by weight in total of at least one terpolymer rubber having a 100°C Mooney viscosity of 30 to 350 selected from ethylenepropylene-dicyclopentadiene terpolymer rubber and ethylene-butene-1-dicyclopentadiene terpolymer rubbers, (B) 5 to 150 parts by weight of an olefinic polymer and (C) 0 to 150 parts by weight of a mineral oil (cf. D2, claim 1; page 2, lines 33 to 38). In claim 2 and on page 2, lines 39 to 44 of document D2 a second embodiment for an elastomer composition including an oil-extended terpolymer rubber is disclosed.

US 2006/0199909 A1 relates to a process for producing a thermoplastic elastomer composition, which comprises the step of crosslinking dynamically at least the following components (A) to (C) in the presence of a crosslinking agent:

(A) 10 to 50% by weight of an oil-extended ethylene-$\alpha$-olefin-non-conjugated diene copolymer rubber having a density of 850 to 900 kg/m$^3$ , and a Mooney viscosity (ML1+4 100°C) of 30 to 150;
(B) 20 to 60% by weight of an ethylene-$\alpha$-olefin copolymer having a density of 850 to 910 kg/ m$^3$, and a melt flow rate of 0.05 to 80 g/10 minutes measured at 230°C under a load of 21.18 N and
(C) 20 to 60% by weight of a propylene resin, wherein the total amount of the components (A) to (C) is 100% by weight.

## SUMMARY OF THE INVENTION

However, Patent Document 2 discloses a paper feed roller mainly applied to a laser beam printer in which EPDM having a high molecular weight and a large content of diene is employed. In order to supply proper flexibility to the roller body for increasing the friction coefficient with respect to papers, therefore, oil must be mixed into a rubber composition in a large quantity of 50 parts by mass with respect to 100 parts by mass of the EPDM as described in Example of Patent Document 2, for example. If the paper feed roller according to Patent Document 2 is applied to an inkjet printer, therefore, the problem of roller marks resulting from bleeding of the large quantity of oil cannot be solved.

An object of the present invention is to provide a paper feed roller including a roller body having excellent flexibility with a high friction coefficient with respect to papers and hardly causing defective images with roller marks resulting from bleeding of oil or the like when built into an inkjet printer for printing images on photographic papers or the like, and a rubber composition for forming the body of the paper feed roller.

The present invention provides a paper feed roller comprising a roller body made of a crosslinked substance of a rubber composition containing a rubber component, a crosslinking agent and a filler, wherein the rubber component consists of at least a single type selected from the group consisting of:

(1) non-oil-extended ethylene propylene diene rubber having Mooney viscosity (at 100°C) measured according to the Japanese Industrial Standards JIS K 6300-1 of 15 to 50;
(2) a mixture of non-oil-extended ethylene propylene diene rubber having Mooney viscosity (at 100°C) of 15 to 50 and oil of not more than 10 parts by mass with respect to 100 parts by mass of the non-oil-extended ethylene propylene diene rubber;
(3) a mixture of non-oil-extended ethylene propylene diene rubber having Mooney viscosity (at 100°C) of 15 to 50 and 5 to 20 parts by weight of liquid ethylene propylene diene rubber; and
(4) a mixture of non-oil-extended ethylene propylene diene rubber having Mooney viscosity (at 100°C) of 15 to 50 and 5 to 20 parts by weight of polybutene, and
the content of the filler is less than 10 parts by mass with respect to 100 parts by mass of the non-oil-extended ethylene propylene diene rubber in any of (1) to (4).

According to the present invention, at least one of the materials (1) to (4) is employed as the rubber component, and the content of the filler with respect to 100 parts by mass of the non-oil-extended EPDM contained in the rubber component selected from the materials (1) to (4) is limited to less than 10 parts by mass. Thus, proper flexibility is supplied to the roller body for increasing the friction coefficient with respect to papers, and formation of defective images resulting from roller marks can be suppressed when a paper feed roller including the roller body is built into an inkjet printer and employed for printing images on photographic papers.

In other words, when only flexible non-oil-extended EPDM as described in (1) is employed as the rubber component and addition of oil is omitted, formation of defective images with roller marks resulting from bleeding can be suppressed while supplying proper flexibility to the roller body and improving the friction coefficient with respect to papers, due to the flexibility of the non-oil-extended EPDM itself and the limitation of the content of the filler to less than 10 parts by mass with respect to 100 parts by mass of the non-oil-extended EPDM.

Oil may be added to the rubber component in the range of not more than 10 parts by mass with respect to 100 parts by mass of the non-oil-extended EPDM, as described in (2). In this case, the quantity of the oil is limited to not more than 10 parts by mass with respect to 100 parts by mass of the non-oil-extended EPDM. Thus, the flexibility of the roller body can be further improved and the friction coefficient of the roller body with respect to papers can be further increased due to the flexibility of the non-oil-extended EPDM, the addition of the small quantity of oil as a softener, and the limitation (to less than 10 parts by mass) of the quantity of the filler, while suppressing formation of defective images with roller marks resulting from bleeding.

As the softener, liquid EPDM may be added to the rubber component in place of the oil, as described in (3). In this case, the liquid EPDM excellently functions as the softener, and is excellent in compatibility with the non-oil-extended EPDM. Further, the liquid EPDM is not crosslinked with the non-oil-extended EPDM and incorporated into the crosslinked substance to bleed. Therefore, the flexibility of the roller body can be further improved and the friction coefficient of the roller body with respect to papers can be further increased due to the flexibility of the non-oil-extended EPDM, the addition of the liquid EPDM as the softener and the limitation (to less than 10 parts by mass) of the quantity of the filler, while suppressing formation of defective images with roller marks resulting from bleeding.

As the softener, polybutene may be added to the rubber component in place of the oil, as described in (4). In this case, the polybutene excellently functions as the softener, and is excellent in compatibility with the non-oil-extended EPDM. Further, the polybutene is a medium-molecular-weight polymer having a higher molecular weight than the oil, and hardly bleeds. Therefore, the flexibility of the roller body can be further improved and the friction coefficient of the roller body with respect to papers can be further increased due to the flexibility of the non-oil-extended EPDM, the addition of the polybutene as the softener and the limitation (to less than 10 parts by mass) of the quantity of the filler, while suppressing formation of defective images with roller marks resulting from bleeding.

Preferably, the crosslinking agent is a peroxide crosslinking agent. Addition of sulfur and an accelerator, a supplement accelerator therefor can be omitted by employing the peroxide crosslinking agent. Consequently, formation of defective images with roller marks resulting from bleeding or blooming of such components can be prevented.

According to the present invention, a paper feed roller including a roller body, made of the aforementioned crosslinked substance has excellent flexibility and a high friction coefficient with respect to papers and hardly causing defective images with roller marks resulting from bleeding of oil when built into an inkjet printer for printing images on photographic papers can be provided.

Thus, according to the present invention, a paper feed roller including a roller body having excellent flexibility and a high friction coefficient with respect to papers and hardly causing defective images with roller marks resulting from bleeding of oil when built into an inkjet printer for printing images on photographic papers and a rubber composition for forming the body of the paper feed roller can be provided.

The foregoing and other objects, features and effects of the present invention will become more apparent from the following detailed description of the embodiments with reference to the attached drawings.

**BRIEF DESCRIPTION OF THE DRAWINGS**

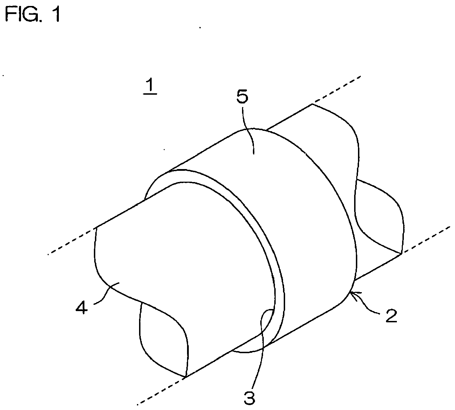

FIG. 1 is a perspective view of a paper feed roller according to an embodiment of the present invention.

**DETAILED DESCRIPTION OF PREFERRED EMBODIMENTS**

<Rubber Composition>

The rubber composition of the roller according to the present invention contains a rubber component, a crosslinking agent and a filler.

The rubber component consists of at least a single type selected from a group consisting of:

(1) non-oil-extended EPDM having Mooney viscosity (at 100°C) of 15 to 50;
(2) a mixture of non-oil-extended EPDM having Mooney viscosity (at 100°C) of 15 to 50 and oil of not more than 10 parts by mass with respect to 100 parts by mass of the non-oil-extended EPDM;
(3) a mixture of non-oil-extended EPDM having Mooney viscosity (at 100°C) of 15 to 50 and 5 to 20 parts by weight liquid ethylene propylene diene rubber; and
(4) a mixture of non-oil-extended EPDM having Mooney viscosity (at 100°C) of 15 to 50 and 5 to 20 parts by weight polybutene, and
the content of the filler is less than 10 parts by mass with respect to 100 parts by mass of the non-oil-extended EPDM in any of (1) to (4).

Examples of the non-oil-extended EPDM include various types of copolymers, prepared by copolymerizing ethylene, propylene and diene, not extended by extender oil and having Mooney viscosity of 15 to 50 at 100°C. Examples of diene include ethylidene norbornene (ENB), dicyclopentadiene (DCPD).

The Mooney viscosity [ML (1 + 4) at 100°C] of the non-oil-extended EPDM at 100°C is limited to 15 to 50, for the following reasons:

Non-oil-extended EPDM having Mooney viscosity of less than 15 is not easy to synthesize. Even if such non-oil-extended EPDM can be synthesized, the molecular weight thereof is so excessively small that proper strength, durability etc. cannot be supplied to the roller body after crosslinking.

On the other hand, non-oil-extended EPDM having Mooney viscosity exceeding 50 is insufficient in flexibility, and cannot supply proper flexibility to the roller body, after crosslinking, made of the rubber composition containing the rubber component selected from the materials (1) to (4). Consequently, the friction coefficient with respect to papers cannot be improved.

In order to further improve the flexibility of the roller body after crosslinking thereby increasing the friction coefficient with respect to papers while supplying proper strength, durability to the roller body, the Mooney viscosity of the non-oil-extended EPDM at 100°C is preferably not less than 20, and preferably not more than 30.

Non-oil-extended EPDM satisfying the aforementioned range of the Mooney viscosity can be prepared from a single type or not less than two types of Espren (registered trademark) 5754 [ML (1 + 4) at 100°C: 30], 514F [ML (1 + 4) at 100°C: 35], 524 [ML (1 + 4) at 100°C: 35], 301A [ML (1 + 4) at 100°C: 44], 501A [ML (1 + 4) at 100°C: 44] and 505A [ML (1 + 4) at 100°C: 47] by Sumitomo Chemical Co. , Ltd. , for example, Mitsui EPT 4021 [ML (1 + 4) at 100°C: 24], 1045 [ML (1 + 4) at 100°C: 38], 3045 [ML (1 + 4) at 100°C: 40] and 4045M [ML (1 + 4) at 100°C: 45] by Mitsui Chemicals Inc., for example.

In the present invention, the Mooney viscosity [ML (1 + 4) at 100°C] at 100°C is expressed by a value measured according to the method described in Japanese Industrial Standards JIS K 6300-1 "Rubber, unvulcanized - Physical property - Part 1: Determination of Mooney viscosity and pre-vulcanization characteristics with Mooney viscometer".

Only the non-oil-extended EPDM (1) can be singly employed as the rubber component constituting the rubber composition according to the present invention. The wording "only non-oil-extended EPDM is singly employed" means that the rubber component contains no components (a softener) other than the non-oil-extended EPDM, and includes a case where not less than two types of the non-oil-extended EPDM are employed as the rubber component.

When only flexible non-oil-extended EPDM whose Mooney viscosity at 100°C satisfies the range of 15 to 50 is singly employed as the rubber component and addition of oil is omitted, formation of defective images with roller marks resulting from bleeding can be suppressed while supplying proper flexibility to the roller body and increasing the friction coefficient with respect to papers due to the flexibility of the non-oil-extended EPDM itself and the limitation (to not less than 10 parts by mass) of the quantity of the filler.

The rubber component constituting the rubber composition according to the present invention may be the mixture (2) of the non-oil-extended EPDM having the Mooney viscosity of 15 to 50 and the oil of not more than 10 parts by mass with respect to 100 parts by mass of the non-oil-extended EPDM.

The quantity of the oil is limited to not more than 10 parts by mass with respect to 100 parts by mass of the non-oil-extended EPDM, since excess oil bleeds on the outer peripheral surface of the roller body to cause defective images with roller marks if the quantity of the oil exceeds 10 parts by mass.

The quantity of the oil is preferably not less than 1 part by mass. If the quantity of the oil is less than 1 part by mass, the effect of further improving the flexibility of the roller body and further increasing the friction coefficient with respect to papers may not be sufficiently attained by adding the oil.

If not less than two types of oil are employed together, the quantity of the oil is the sum thereof.

When the mixture (2) is employed as the rubber component, the flexibility of the roller body can be further improved and the friction coefficient of the roller body with respect to papers can be further increased due to the flexibility of the non-oil-extended EPDM, the addition of the small quantity of oil as a softener, and the limitation (to less than 10 parts by mass) of the quantity of the filler, while suppressing formation of defective images with roller marks resulting from bleeding by limiting the quantity of the oil in the aforementioned range.

The oil is prepared from oil in the conventional sense, or can be prepared from a plasticizer having an equivalent function to oil in a narrow sense alone, or along with the oil in a narrow sense.

The oil in a narrow sense can be prepared from a single type or not less than two types of mineral oil such as paraffinic oil, naphthenic oil or aromatic oil, synthetic oil consisting of a hydrocarbon oligomer, process oil, for example. The synthetic oil can be prepared from a single type or not less than two types of an oligomer of $\alpha$-olefin, an oligomer of butene, an amorphous oligomer of ethylene and $\alpha$-olefin for example. The plasticizer can be prepared from a single type or not less than two types of dioctyl phthalate (DOP), dibutyl phthalate (DBP), dioctyl sebacate (DOS), dioctyl adipate (DOA) for example.

The rubber component constituting the rubber composition according to the present invent ion may be the mixture (3) of the non-oil-extended EPDM having the Mooney viscosity of 15 to 50 and the liquid EPDM.

The liquid EPDM is a medium-molecular-weight polymer consisting of a copolymer containing ethylene, propylene and diene, presenting a liquid state at room temperature and crosslinked with the non-oil-extended EPDM to be incorporated into the crosslinked substance.

When the mixture (3) is employed as the rubber component, the liquid EPDM excellently functions as a softener, and is excellent in compatibility with the non-oil-extended EPDM. Further, the liquid EPDM is not crosslinked with the non-oil-extended EPDM and incorporated into the crosslinked substance to bleed. Therefore, the flexibility of the roller body can be further improved and the friction coefficient of the roller body with respect to papers can be further increased due to the flexibility of the non-oil-extended EPDM, the addition of the liquid EPDM as the softener and the limitation (to less than 10 parts by mass) of the quantity of the filler, while suppressing formation of defective images with roller marks resulting from bleeding.

The quantity of the liquid EPDM is not less than 5 parts by mass, preferably not less than 10 parts by mass, and not more than 20 parts by mass with respect to 100 parts by mass of the non-oil-extended EPDM.

If the quantity of the liquid EPDM is less than the aforementioned range, the effect of further improving the flexibility of the roller body and further increasing the friction coefficient with respect to papers may not be sufficiently attained by adding the liquid EPDM. If the quantity of the liquid EPDM exceeds the aforementioned range, on the other hand, proper strength, durability may not be supplied to the roller body after crosslinking.

If not less than two types of liquid EPDM are employed together, the quantity of the EPDM is the sum thereof.

The liquid EPDM can be prepared from a single type or not less than two types of Trilene 54 [DCPD type, diene content: 9. 5 mass %, ethylene/propylene = 48/52 (mass ratio), molecular weight Mw = 30000], 65 [DCPD type, diene content: 9.5 mass %, ethylene/propylene = 48/52 (mass ratio), molecular weight Mw = 40000], 66 [ENB type, diene content: 4.5, ethylene/propylene = 45/55 (mass ratio), molecular weight Mw = 40000] and 67 [ENB type, diene content: 9.5, ethylene/propylene = 45/55 (mass ratio), molecular weight Mw= 40000] byUniroyal Chemical Company Inc. for example.

The rubber component constituting the rubber composition according to the present invention may be the mixture (4) of the non-oil-extended EPDM having the Mooney viscosity of 15 to 50 and polybutene.

When the mixture (4) is employed as the rubber component, the polybutene excellently functions as a softener, and is excellent in compatibility with the non-oil-extended EPDM. Further, the polybutene is a medium-molecular-weight polymer having a high molecular weight, and hardly bleeds. Therefore, the flexibility of the roller body can be further improved and the friction coefficient of the roller body with respect to papers can be further increased due to the flexibility of the non-oil-extended EPDM, the addition of the polybutene as the softener, and the limitation (to less than 10 parts by mass) of the quantity of the filler, while suppressing formation of defective images with roller marks resulting from bleeding.

The quantity of the polybutene is not less than 5 parts by mass, particularly preferably not less than 10 parts by mass, and not more than 20 parts by mass with respect to 100 parts by mass of the non-oil-extended EPDM.

If the quantity of the polybutene is less than the aforementioned range, the effect of further improving the flexibility of the roller body and further increasing the friction coefficient with respect to papers may not be sufficiently attained by adding the polybutene. If the quantity of the polybutene exceeds the aforementioned range, on the other hand, proper strength, durability may not be supplied to the roller body after crosslinking.

If not less than two types of polybutene are employed together, the quantity of the polybutene is the sum thereof.

The polybutene can be prepared from a single type or not less than two types of a polymer, mainly composed of isobutylene, having an arbitrary molecular weight, a refined hydrogenated substance thereof for example.

The polybutene can be prepared from at least a single type of Nissan Polybutene Polybis (registered trademark) 30N (number-average molecular weight: 1350) and 200N (number-average molecular weight: 2650) by NOF Corporation for example.

The refined hydrogenated substance of the polybutene denotes hydrogenated polybutene having no color, no odor and no taste, prepared through steps of highly refining and deodorizing polybutene, to be used as an oleaginous cosmetic material.

This type of refined hydrogenated substance of polybutene contains no easily bleeding low-molecular-weight component, and hence formation of defective images with roller marks resulting from bleeding can be more effectively prevented.

The refined hydrogenated substance of the polybutene can be prepared from at least a single type of Parleam (registered trademark) 18 [kinetic viscosity (98.9°C): 300 mm$^2$/S, refractive index (20°C): 1.494, specific gravity (20/20°C) : 0.981, acid value: not more than 0.1 mgKOH/g] and 24 [kinetic viscosity (98.9°C): 800 mm$^2$/S, refractive index (20°C): 1.499, specific gravity (20/20°C): 0.900, acid value: not more than 0.1 mgKOH/g] by NOF Corporation for example.

The crosslinking agent constituting the rubber composition according to the present invention along with the rubber component of at least a single type of the materials (1) to (4) is particularly preferably a peroxide crosslinking agent. Addition of sulfur and an accelerator, a supplement accelerator etc. therefor can be omitted by employing the peroxide crosslinking agent. Consequently, formation of defective images with roller marks resulting from bleeding or blooming of such components can be prevented.

The quantity of the peroxide crosslinking agent is preferably not less than 1 part by mass and preferably not more than 4 parts by mass with respect to 100 parts by mass of the non-oil-extended EPDM.

If the quantity of the peroxide crosslinking agent is less than the aforementioned range, proper strength, durability etc. may not be supplied to the roller body. If the quantity of the peroxide crosslinking agent exceeds the aforementioned range, on the other hand, proper flexibility may not be supplied to the roller body for increasing the friction coefficient with respect to papers. The quantity of the peroxide crosslinking agent may be arbitrarily set within the aforementioned range, in response to the hardness required to the formed roller body.

If not less than two types of peroxide crosslinking agents are employed together, the quantity of the peroxide crosslinking agent is the sum thereof.

The peroxide crosslinking agent can be prepared from a single type or not less than two types of benzoyl peroxide, 1,1-bis(tert-butyl peroxy)-3,3,5-trimethylcyclohexane, 2,5-dimethyl-2,5-di(benzoyl peroxy)hexane, di(tert-butyl peroxy)diisopropyl benzene, 1,4-bis[(tert-butyl)peroxy isopropyl]benzene, di(tert-butyl peroxy)benzoate, tert-butyl peroxy benzoate, dicumyl peroxide, tert-butylcumyl peroxide, 2,5-dimethyl-2,5-di(tert-butyl peroxy)hexane, di-tert-butyl peroxide, 2,5-dimethyl-2,5-di(tert-butyl peroxy)-3-hexene for example.

The filler can be prepared from a single type or not less than two types of inorganic fillers such as calcium carbonate, magnesium carbonate, metal powder, ceramic powder, glass powder, wood meal, carbon black for example, and particularly preferably prepared from carbon black capable of functioning also as a reinforcer.

The carbon black can be prepared from a single type or not less than two types of various carbon black materials such as HAF, MAF, FEF, GPF, SRF, SAF, MT, FT for example, and particularly preferably prepared from HAF.

The quantity of the filler is limited to less than 10 parts by mass with respect to 100 parts by mass of the non-oil-extended EPDM. If the quantity of the filler is in excess of the aforementioned range, the friction coefficient with respect to papers cannot be increased by supplying proper flexibility to the roller body. If the quantity of the filler is excessively increased, the quantity of the rubber component is relatively reduced, and proper strength, durability may not be supplied to the roller body either.

In order to supply proper strength, durability etc. to the roller body, the quantity of the filler is preferably not less than 1 part by mass with respect to 100 parts by mass of the non-oil-extended EPDM. In order to further improve the flexibility of the roller body for increasing the friction coefficient with respect to papers, the quantity of the filler is preferably not more than 7 parts by mass with respect to 100 parts by mass of the non-oil-extended EPDM.

If not less than two types of fillers are employed together, the content of the filler is the sum thereof.

The rubber composition of the roller according to the present invention is preferably constituted of only the aforementioned components, not to contain other components having a possibility of bleeding or blooming on the outer peripheral surface of the roller body.

\<Paper Feed Roller\>

FIG. 1 is a perspective view of a paper feed roller according to an embodiment of the present invention.

Referring to FIG. 1, a paper feed roller 1 according to the embodiment includes a cylindrical roller body 2 made of the rubber composition and a shaft 4 inserted into a through-hole 3 at the center of the roller body 2. The shaft 2 is made of metal, ceramic, hard resin for example.

The roller body 2 is formed by cylindrically molding the aforementioned rubber composition by arbitrary molding such as injection molding, extrusion molding and thereafter crosslinking the same.

The roller body 2 and the shaft 4 are integrated with each other by rendering the outer diameter of the shaft 4 slightly larger than the inner diameter of the through-hole 3 of the roller body 2 and press-fitting the shaft 4 into the through-hole 3, by bonding the roller body 2 and the shaft 4 to each other with an adhesive, or by vulcanization-bonding the roller body 2 and the shaft 4 to each other with a vulcanizing adhesive in crosslinking of the roller body 2, for example.

At an arbitrary point of time around the integration of the roller body 2 and the shaft 4, an outer peripheral surface 5 of the roller body 2 is polished to have prescribed surface roughness, the outer peripheral surface 5 is knurled or embossed, or both ends of the roller body 2 are cut so that the axial length of the roller body 2, i.e., the width of the paper feed roller 1 reaches a prescribed value, if necessary. Thus, the paper feed roller 1 shown in FIG. 1 is manufactured.

The roller body 2 may have a two-layer structure formed by an outer layer closer to the outer peripheral surface 5 and an inner layer closer to the shaft 4. In this case, at least the outer layer may be made of the rubber composition.

The through-hole 3 may be provided on a position eccentric to the center of the roller body 2, depending on the application of the paper feed roller 1.

The roller body 2 may not be cylindrical, but may have an irregular shape such that the outer peripheral surface 5 is partially notched in a planar manner, for example. In order to form the roller body 2 having such an irregular shape, the roller body 2 may be directly molded into the irregular shape by injection molding, extrusion molding, or the cylindrically formed roller body 2 may be worked into the irregular shape by post-working the outer peripheral surface 5 thereof.

The cylindrically formed roller body 2 may also be deformed into the irregular shape by press-fitting the shaft 4 whose sectional shape is deformed to correspond to the irregular shape into the through-hole 3. In this case, the outer peripheral surface 5 can be polished, knurled or embossed in the state of the cylindrical roller body 2 not yet deformed, whereby workability can be improved.

While the roller body 2 is provided on only one portion of the shaft 4 in FIG. 1, such roller bodies 2 may be provided on a plurality of portions of the shaft 4.

The paper feed roller 1 according to the present invention can be suitably employed as a paper feed roller such as a paper feeding roller, a transfer roller, a platen roller, a paper ejection roller built into a paper feed mechanism of an inkjet printer, in particular.

The present invention may be embodied in other ways within a range not deviating from the subject matter of the present invention.

[Examples]

While the present invention is now described with reference to Examples and comparative examples, the present invention is not restricted to the following Examples.

In each of the following Examples and comparative examples, preparation of a rubber composition as well as manufacturing and tests of a paper feed roller were executed in an environment having a temperature of $23 \pm 1°C$ and relative humidity of $55 \pm 1$ %, unless otherwise stated.

(1) System of Rubber Component (1)

<Example 1>

100 parts by mass of non-oil-extended EPDM [Espren (registered trademark) 505A by Sumitomo Chemical Co., Ltd., Mooney viscosity ML (1 + 4) at 100°C: 47] was employed as the rubber component (1).

A rubber composition was prepared by adding 1. 6 parts by mass of dicumyl peroxide [Percumyl (registered trademark) D by NOF corporation] as a peroxide crosslinking agent and 5 parts by mass of carbon black [HAF, Seast 3 (product name) by Tokai Carbon Co., Ltd.] as a filler to 100 parts by mass of the non-oil-extended EPDM and kneading the mixture.

Then, a cylindrical body having an inner diameter of $\phi$24. 6 and an outer diameter of $\phi$31.5 was formed by cylindrically extrusion-molding the rubber composition and thereafter vulcanizing the same at 160°C for 30 minutes. A cylindrical roller body was formed by polishing the obtained cylindrical body into an outer diameter of $\phi$30 with a cylindrical grinder and thereafter cutting the same into a length of 15 mm.

A paper feed roller having an outer diameter of $\phi$30 was manufactured by press-fitting a shaft of $\phi$26 into a through-hole of the roller body.

<Example 2>

A paper feed roller was manufactured by preparing a rubber composition similarly to Example 1, except that the quantity of dicumyl peroxide was set to 2 parts by mass.

<Example 3>

100 parts by mass of non-oil-extended EPDM [Mitsui EPT4021 by Mitsui Chemicals Inc., Mooney viscosity ML (1 + 4) at 100°C: 24] was employed as the rubber component (1).

A rubber composition was prepared by adding 2 parts by mass of dicumyl peroxide [Percumyl (registered trademark) D by NOF Corporation] as a peroxide crosslinking agent and 5 parts by mass of carbon black [HAF, Seast 3 (product name) by Tokai Carbon Co., Ltd.] as a filler to 100 parts by mass of the non-oil-extended EPDM and kneading the mixture.

Then, a paper feed roller was manufactured similarly to Example 1, except that the rubber composition was employed.

<Comparative Example 1>

A paper feed roller was manufactured by preparing a rubber composition similarly to Example 1, except that 10 parts by mass of calcium carbonate [Hakuenka (registered trademark) CC by Shiraishi Calcium Kaisha, Ltd.] was further added as a filler.

(2) System of Rubber Component (2)

<Example 4>

100 parts by mass of non-oil-extended EPDM [Espren 505A by Sumitomo Chemical Co., Ltd., Mooney viscosity ML (1 + 4) at 100°C: 47] and 10 parts by mass of paraffin oil [Diana (registered trademark) process oil PW-380 by Idemitsu Kosan Co., Ltd.] were employed as the rubber component (2).

A rubber composition was prepared by further adding 3 parts by mass of dicumyl peroxide [Percumyl D by NOF Corporation] as a peroxide crosslinking agent and 5 parts by mass of carbon black [HAF, Seast 3 (product name) by Tokai Carbon Co., Ltd.] as a filler to 100 parts bymass of the non-oil-extended EPDM and 10 parts by mass of the paraffin oil and kneading the mixture.

Then, a paper feed roller was manufactured similarly to Example 1, except that the rubber composition was employed.

<Comparative Example 2>

A paper feed roller was manufactured by preparing a rubber composition similarly to Example 4, except that 100 parts by mass of non-oil-extended EPDM [Espren 532 by Sumitomo Chemical Co., Ltd., Mooney viscosity ML (1 + 4) at 125°C: 81, estimated value of Mooney viscosity ML (1 + 4) at 100°C: 115] and 10 parts by mass of paraffin oil [Diana process oil PW-380 by Idemitsu Kosan Co. , Ltd.] were employed as the rubber component (2).

<Comparative Example 3>

A paper feed roller was manufactured by preparing a rubber composition similarly to Example 4, except that 90 parts by mass of non-oil-extended EPDM [Espren 505A by Sumitomo Chemical Co., Ltd., Mooney viscosity ML (1 + 4) at 100°C: 47] and 20 parts by mass of oil-extended EPDM [Espren 670Fby Sumitomo Chemical Co., Ltd., rubber component/extender oil = 100/100 (mass ratio), estimated value of Mooney viscosity ML (1 + 4) at 10C°C: 106] were employed as the rubber component and paraffin oil was omitted.

<Comparative Example 4>

A paper feed roller was manufactured by preparing a rubber composition similarly to Example 4, except that the quantity of paraffin oil was set to 12 parts by mass.

<Comparative Example 5>

A paper feed roller was manufactured by preparing a rubber composition similarly to Example 4, except that the quantity of paraffin oil was set to 20 parts by mass.

<Comparative Example 6>

A paper feed roller was manufactured by preparing a rubber composition similarly to Example 4, except that 10 parts by mass of calcium carbonate [Hakuenka (registered trademark) CC by Shiraishi Calcium Kaisha, Ltd.] was further added as a filler.

(3) Systems of Rubber Components (3) and (4)

<Example 5>

100 parts by mass of non-oil-extended EPDM [Mitsui EPT 4021 by Mitsui Chemicals Inc., Mooney viscosity ML (1 + 4) at 100°C: 24] and 5 parts by mass of liquid EPDM [Trilene 65 by Uniroyal Chemical Company Inc. ] were employed as the rubber component (3).

A rubber composition was prepared by further adding 2 parts by mass of dicumyl peroxide [Percumyl D by NOF Corporation] as a peroxide crosslinking agent and 5 parts by mass of carbon black [HAF, Seast 3 (product name) by Tokai Carbon Co. , Ltd.] as a filler to 100 parts by mass of the non-oil-extended EPDM and 5 parts by mass of the liquid EPDM and kneading the mixture.

Then, a paper feed roller was manufactured similarly to Example 1, except that the rubber composition was employed.

<Example 6>

A paper feed roller was manufactured by preparing a rubber composition similarly to Example 5, except that the quantity of liquid EPDM was set to 20 parts by mass.

<Comparative Example 7>

A paper feed roller was manufactured by preparing a rubber composition similarly to Example 5, except that the quantity of liquid EPDM was set to 40 parts by mass.

<Example 7>

100 parts by mass of non-oil-extended EPDM [Espren 505A by Sumitomo Chemical Co., Ltd., Mooney viscosity ML (1 + 4) at 100°C: 47] and 20 parts by mass of polybutene [Nissan Polybutene Polybis (registered trademark) 200N by NOF Corporation] were employed as the rubber component (4).

A rubber composition was prepared by further adding 2 parts by mass of dicumyl peroxide [Percumyl D by NOF Corporation] as a peroxide crosslinking agent and 5 parts by mass of carbon black [HAF, Seast 3 (product name) by Tokai Carbon Co., Ltd.] as a filler to 100 parts bymass of the non-oil-extended EPDM and 20 parts by mass of the polybutene and kneading the mixture.

Then, a paper feed roller was manufactured similarly to Example 1, except that the rubber composition was employed.

<Example 8>

100 parts by mass of non-oil-extended EPDM [Espren 505A by Sumitomo Chemical Co., Ltd., Mooney viscosity ML (1 + 4) at 100°C: 47] and 20 parts by mass of hydrogenated polyisobutene [Parleam (registered trademark) 24 by NOF Corporation] were employed as the rubber component (4).

A rubber composition was prepared by further adding 2 parts by mass of dicumyl peroxide [Percumyl D by NOF Corporation] as a peroxide crosslinking agent and 5 parts by mass of carbon black [HAF, Seast 3 (product name) by Tokai Carbon Co., Lτd.] as a filler to 100 parts bymass of the non-oil-extended EPDM and 20 parts by mass of the polybutene and kneading the mixture.

Then, a paper feed roller was manufactured similarly to Example 1, except that the rubber composition was employed.

<Comparative Example 8>

100 parts by mass of non-oil-extended EPDM [Espren 505A by Sumitomo Chemical Co., Ltd., Mooney viscosity ML (1 + 4) at 100°C: 47] and 20 parts by mass of liquid polyisoprene rubber [Kurapren (registered trademark) LIR-200 by Kuraray Co. , Ltd.] were employed as a rubber component.

A rubber composition was prepared by further adding 2 parts by mass of dicumyl peroxide [Percumyl D by NOF Corporation] as a peroxide crosslinking agent and 5 parts by mass of carbon black [HAF, Seast 3 (product name) by Tokai Carbon Co. , Ltd.] as a filler to 100 parts bymass of the non-oil-extended EPDM and 20 parts by mass of the liquid polyisoprene rubber and kneading the mixture.

Then, a paper feed roller was manufactured similarly to Example 1, except that the rubber composition was employed.

(4) Evaluation

<Measurement of Rubber Hardness>

The JIS A hardness of the roller body of the paper feed roller manufactured according to each of Examples and comparative examples was measured.

<Measurement of Friction Coefficient>

The roller body of the paper feed roller according to each of Examples and comparative examples immediately after manufacturing was brought into pressure contact with an end portion of a paper [P paper 20 by Fuji Xerox Co. , Ltd.], having a width of 60 mm and a length of 210 mm, placed on a plate of polytetrafluoroethylene (PTFE) fixed so that a single surface thereof was horizontal, with application of a vertical load of W = 250 gf. Transport force F (gf) applied to the paper rotated at a peripheral speed of 300 mm/sec. in this state was measured with a load cell connected to another end of the paper.

The initial friction coefficient $\mu$ was obtained according to the following equation (a):

$$\mu = F/250 \ldots (a)$$

The initial friction coefficient $\mu$ must be not less than at least 1. 5, so that the paper feed roller serves desired functions.

<Tensile Test>

A dumbbell-shaped No. 1 test piece defined in Japanese Industrial Standards JIS K6251-1993 "Rubber, vulcanized or thermoplastic - Determination of tensile stress-strain" was manufactured by shaping the rubber composition prepared according to each of Examples and comparative examples into a sheet, vulcanizing the sheet under the same conditions as Example 1 and thereafter punching the same.

Then, tensile stress $M_{100}$ (MPa) in elongation by 100% was obtained by conducting a tensile test on the test piece according to the determination.

It is understood that the flexibility of the roller body is improved and the friction coefficient $\mu$ with respect to papers is increased as the tensile stress $M_{100}$ is reduced. If the tensile stress $M_{100}$ is excessively reduced, however, abrasion resistance of the roller body is reduced.

<Evaluation of Abrasion Resistance>

The roller body of the paper feed roller manufactured according to each of Examples and comparative examples was brought into pressure contact with the upper surface of a sand paper (number#100) fixed so that a ground surface was horizontal, with application of a vertical load of 30 g. Abrasion resistance was evaluated by abrading the roller body by rotating the same at 200 rpm for three minutes in this state and thereafter obtaining the difference in mass before and after the abrasion as abrasion loss (mg).

When the paper feed roller is applied to an inkjet printer, the roller body can be regarded as having practically nonproblematic abrasion resistance if the abrasion loss is not more than 15 mg.

<Evaluation of Roller Mark>

The roller body of the paper feed roller manufactured according to each of Examples and comparative examples was brought into pressure contact with the upper surface of a photographic paper [photographic paper (glossy paper) by Seiko Epson Corporation] with application of a vertical load of 30 g. The roller body was left in a high-temperature high-humidity environment having a temperature of 30 ± 1°C and relative humidity of 80 ± 1 % for three days. Thereafter a printed surface of the photographic paper was observed, to evaluate that exhibiting transfer of oil or the like as defective (×), that exhibiting no transfer at all as excellent (◎) and that slightly exhibiting transfer with a roller mark at a practically nonproblematic level in practical printing of a photograph as normal (○).

<Paper Feeding Test>

The paper feed roller manufactured according to each of Examples and comparative examples was substituted for the paper feed roller of an inkjet printer [Pixus (registered trademark) MP470 by Canon Inc.], to continuously feed 100 postcard papers through the inkjet printer in a low-temperature low-humidity environment having a temperature of 10 ± 1°C and relative humidity of 20 ± 1 %. That causing no defective paper feeding was evaluated as excellent (OK), and that causing defective paper feeding at least once was evaluated as defective (NG).

Tables 1 and 2 show the results.

Table 1

| | | | Ex. 1 | Ex. 2 | Ex. 3 | Comp. Ex. 1 | Ex.4 | Comp. Ex. 2 | Comp. Ex. 3 | Comp. Ex. 4 |
|---|---|---|---|---|---|---|---|---|---|---|
| Part by Mass | EPDM | 505A | 100 | 100 | - | 100 | 100 | - | 90 | 100 |
| | | EPT4021 | - | - | 100 | - | - | - | - | - |
| | | 532 | - | - | - | - | - | 100 | - | - |
| | | 670F | - | - | - | - | - | - | 20 | 20 - |
| | Oil | PW-380 | - | - | - | - | 10 | 10 | - | 12 |
| | Liquid EPDM | Trilene 65 | - | - | - | - | - | - | - | - |
| | Polybutene | Polybis 200N | - | - | - | - | - | - | - | - |
| | | Parleam 24 | - | - | - | - | - | - | - | - |
| | Liquid IR | LIR-200 | - | - | - | - | - | - | - | - |
| | Crosslinking Agent | Percumyl D | 1.6 | 2 | 2 | 1.6 | 3 | 3 | 3 | 3 |
| | Filler | Seast 3 | 5 | 5 | 5 | 5 | 5 | 5 | 5 | 5 |
| | | Hakuenka CC - | - | - | 10 | - | - | - | - |
| Evaluation | JIS A Hardness | | 44 | 45 | 42 | 47 | 43 | 44 | 42 | 42 |
| | Friction Coefficient μ | | 1.82 | 1.73 | 1.80 | 1.35 | 1.70 | 1.57 | 1.62 | 1.80 |
| | Tensile Stress $M_{100}$(MPa) | | 0.93 | 0.95 | 0.95 | 1.29 | 1.04 | 1.06 | 1.12 | 0.95 |
| | Abrasion Loss (mg) | | 1.3 | 0.9 | 1.8 | 3.9 | 1.0 | 0.9 | 0.9 | 1.2 |
| | Roller Mark | | ◎ | ◎ | ◎ | ◎ | ○ | ○ | ○ | × |
| | Paper Feedability | | OK | OK | OK | NG | OK | NG | NG | OK |

EP 2 395 051 B1

Table 2

| | | | Comp. Ex. 5 | Comp. Ex. 6 | Ex. 5 | Ex.6 Ex. 6 | Comp. Ex. 7 | Ex. 7 | Ex. 8 | Comp. Ex.8 |
|---|---|---|---|---|---|---|---|---|---|---|
| Part by Mass | EPDM | 505A | 100 | 100 | - | - | - | 100 | 100 | 100 |
| | | EPT4021 | - | - | 100 | 100 | 100 | - | - | - |
| | | 532 | - | - | - | - | - | - | - | - |
| | | 670F | - | - | - | - | - | - | - | - |
| | Oil | PW-380 | 25 | 10 | - | - | - | - | - | - |
| | Liquid EPDM | Trilene 65 | - | - | 5 | 20 | 40 | - | - | - |
| | Polybutene | Polybis 200N | - | - | - | - | - | 20 | - | - |
| | | Parleam | | - | - | - | - | - | 20 | - |
| | Liquid IR | LIR-200 | - | - | - | - | - | - | - | 20 |
| | Crosslinking Agent | Percumyl D | 3 | 3 | 2 | 2 | 2 | 2 | 2 | 2 |
| | Filler | Seast 3 | 5 | 5 | 5 | 5 | 5 | 5 | 5 | 5 |
| | | Hakuenka CC | - | 10 | - | | - | - | - | - |
| Evaluation | JIS A Hardness | | 35 | 47 | 40 | 35 | 30 | 37 | 36 | 36 |
| | Friction Coefficient $\mu$ | | 2.07 | 1.40 | 1.82 | 1.95 | 2.20 | 1.98 | 1.92 | 1.93 |
| | Tensile Stress $M_{100}$ (MPa) | | 0.72 | 1.34 | 0.90 | 0.72 | 0.53 | 0.63 | 0.64 | 0.6 |
| | Abrasion Loss (mg) | | 4.8 | 4.8 | 2.0 | 3.3 | 4.7 | 4.5 | 4.3 | 4.8 |
| | Roller Mark | | × | ◎ | ◎ | ◎ | ◎ | ○ | ◎ | × |
| | Paper Feedability | | OK | NG | OK | OK | OK | OK | OK | OK |

It has been understood from the results of Example 4 and comparative examples 2 and 3 shown in Tables 1 and 2 that non-oil-extended EPDM having Mooney viscosity [ML (1 + 4) at 100°C] of 15 to 50 at 100°C must be employed as the EPDM, so that the paper feedability can be improved by increasing the friction coefficient of the roller body.

It has been understood from the results of Example 1 and comparative example 1 as well as Example 4 and comparative example 6 that the sum of fillers must be set to less than 10 parts by mass with respect to 100 parts by mass of the non-oil-extended EPDM. It has also been understood that the paper feedability can thus be improved by increasing the friction coefficient of the roller body, and the strength, durability etc. of the roller body can also be improved.

It has been understood from the results of Examples 1 to 3 that the hardness and the friction coefficient or the strength and the durability of the roller body can be adjusted by controlling the quantity of the peroxide crosslinking agent or the Mooney viscosity of the non-oil-extended EPDM.

It has been understood from the results of Example 4 and comparative examples 4 and 5 that the quantity of the oil must be set to not more than 10 parts by mass with respect to 100 parts by mass of the non-oil-extended EPDM in the system (2) employing the non-oil-extended EPDM and the oil as the rubber component. It has been understood that formation of roller marks can thereby be suppressed.

It has been understood from the results of Examples 5 to 8 and comparative example 8 that a polymer-based softener employed along with the non-oil-extended EPDM as the rubber component must be liquid EPDM or polybutene. It has been understood that formation of roller marks can thereby be suppressed. In other words, it has been confirmed that the liquid IR used in comparative example 7 bleeds on the outer peripheral surface of the roller body to cause roller marks due to lower compatibility with the non-oil-extended EPDM as compared with the liquid EPDM and the polybutene.

It has been understood from the results of Examples 5 to 7 that the quantity of the liquid EPDM is preferably set to not less than 5 parts by mass and not more than 20 parts by mass with respect to 100 parts by mass of the non-oil-extended EPDM in the system (3) employing the non-oil-extended EPDM and the liquid EPDM as the rubber component. It has also been understood that the hardness and the friction coefficient or the strength and the durability of the roller body can be adjusted by controlling the quantity of the liquid EPDM in the aforementioned range.

It has been understood from the results of Examples 7 and 8 that a hydrogenated substance (hydrogenated polybutene) is preferably employed as the polybutene in the system (4) employing the non-oil-extended EPDM and the polybutene as the rubber component, in order to suppress formation of roller marks. In other words, it has been confirmed that the hydrogenated polybutene contains no easily bleeding low-molecular-weight component and hence formation of defective images with roller marks resulting from bleeding can be more effectively prevented by employing the same.

While the present invention has been described in detail by way of the embodiments thereof, it should be understood that these embodiments are merely illustrative of the technical principles of the present invention but not limitative of the invention. The spirit and scope of the present invention are to be limited only by the appended claims.

## Claims

1. A paper feed roller comprising a roller body made of a crosslinked substance of a rubber composition containing a rubber component, a crosslinking agent and a filler, wherein
   the rubber component consists of at least a single type selected from the group consisting of:

   (1) non-oil-extended ethylene propylene diene rubber having Mooney viscosity (at 100°C) measured according to the Japanese Industrial Standards JIS K 6300-1 of 15 to 50;
   (2) amixtureofnon-oil-extendedethylenepropylenediene rubber having Mooney viscosity (at 100°C) of 15 to 50 and oil of not more than 10 parts by mass with respect to 100 parts bymass of the non-oil-extended ethylene propylene diene rubber;
   (3) a mixture of non-oil-extended ethylene propylene diene rubber having Mooney viscosity (at 100°C) of 15 to 50 and 5 to 20 parts by weight of liquid ethylene propylene diene rubber; and
   (4) a mixture of non-oil-extended ethylene propylene diene rubber having Mooney viscosity (at 100°C) of 15 to 50 and 5 to 20 parts by weight of polybutene, and
   the content of the filler is less than 10 parts by mass with respect to 100 parts by mass of the non-oil-extended ethylene propylene diene rubber in any of (1) to (4).

2. The paper feed roller according to Claim 1, wherein the Mooney viscosity of the non-oil-extended ethylene propylene diene rubber is 20 to 30.

3. The paper feed roller according to Claim 1, wherein
   the rubber component includes (2) the mixture of non-oil-extended ethylene propylene diene rubber having Mooney viscosity (at 100°C) of 15 to 50 and oil of not more than 10 parts by mass with respect to 100 parts by mass of the non-oil-extended ethylene propylene diene rubber, and
the quantity of the oil is not less than 1 part by mass with respect to 100 parts by mass of the non-oil-extended ethylene propylene diene rubber.

4. The paper feed roller according to Claim 1, wherein
the rubber component includes (3) the mixture of non-oil-extended ethylene propylene diene rubber having Mooney viscosity (at 100°C) of 15 to 50 and liquid ethylene propylene diene rubber, and
the quantity of the liquid ethylene propylene diene rubber is 5 to 40 parts by mass with respect to 100 parts by mass of the non-oil-extended ethylene propylene diene rubber.

5. The paper feed roller according to Claim 1, wherein
the rubber component includes (4) the mixture of non-oil-extended ethylene propylene diene rubber having Mooney viscosity (at 100°C) of 15 to 50 and polybutene, and
the quantity of the polybutene is 5 to 40 parts by mass with respect to 100 parts by mass of the non-oil-extended ethylene propylene diene rubber.

6. The paper feed roller according to Claim 1, wherein
the quantity of the crosslinking agent is 1 to 4 parts by mass with respect to 100 parts by mass of the non-oil-extended ethylene propylene diene rubber.

7. The paper feed roller according to Claim 1, wherein
the quantity of the filler is 1 to 7 parts by mass with respect to 100 parts by mass of the non-oil-extended ethylene propylene diene rubber.

8. The paper feed roller according to Claim 1, wherein
the crosslinking agent is a peroxide crosslinking agent.

9. The paper feed roller according to Claim 1, wherein
the roller body is provided with a through-hole at the center thereof, and
the paper feed roller further includes a shaft inserted into the through-hole of the roller body.

**Patentansprüche**

1. Papiervorschubrolle, die einen Rollenkörper umfasst, der aus einer vernetzten Substanz einer Kautschukzusammensetzung hergestellt ist, die eine Kautschukkomponente, ein Vernetzungsmittel und einen Füllstoff enthält, wobei

die Kautschukkomponente aus zumindest einem einzigen Typ besteht, der aus der Gruppe ausgewählt ist, bestehend aus:

(1) nicht mit Öl gestrecktem Ethylen-Propylen-Dien-Kautschuk mit einer gemäß dem Japanischen Industriestandard JIS K 6300-1 gemessenen Mooney-Viskosität (bei 100°C) von 15 bis 50;
(2) einem Gemisch aus nicht mit Öl gestrecktem Ethylen-Propylen-Dien-Kautschuk mit einer Mooney-Viskosität (bei 100°C) von 15 bis 50 und Öl mit nicht mehr als 10 Masseteilen mit Bezug auf 100 Masseteile des nicht mit Öl gestreckten Ethylen-Propylen-Dien-Kautschukes;
(3) einem Gemisch aus nicht mit Öl gestrecktem Ethylen-Propylen-Dien-Kautschuk mit einer Mooney-Viskosität (bei 100°C) von 15 bis 50 und 5 bis 20 Gewichtsteilen eines flüssigen Ethylen-Propylen-Dien-Kautschukes; und
(4) einem Gemisch aus nicht mit Öl gestrecktem Ethylen-Propylen-Dien-Kautschuk mit einer Mooney-Viskosität (bei 100°C) von 15 bis 50 und 5 bis 20 Gewichtsteilen Polybuten, und

der Gehalt des Füllstoffes in einem jeden von (1) bis (4) kleiner ist als 10 Masseteile mit Bezug auf 100 Masseteile des nicht mit Öl gestreckten Ethylen-Propylen-Dien-Kautschukes.

2. Papiervorschubrolle nach Anspruch 1, wobei die Mooney-Viskosität des nicht mit Öl gestreckten Ethylen-Propylen-Dien-Kautschukes 20 bis 30 beträgt.

3. Papiervorschubrolle nach Anspruch 1, wobei

die Kautschukkomponente (2) das Gemisch aus nicht mit Öl gestrecktem Ethylen-Propylen-Dien-Kautschuk mit einer Mooney-Viskosität (bei 100°C) von 15 bis 50 und Öl mit nicht mehr als 10 Masseteilen mit Bezug auf 100 Masseteile des nicht mit Öl gestreckten Ethylen-Propylen-Dien-Kautschukes umfasst, und
die Menge des Öls nicht kleiner ist als 1 Masseteil mit Bezug auf 100 Masseteile des nicht mit Öl gestreckten Ethylen-Propylen-Dien-Kautschukes.

4. Papiervorschubrolle nach Anspruch 1, wobei

die Kautschukkomponente (3) das Gemisch aus nicht mit Öl gestrecktem Ethylen-Propylen-Dien-Kautschuk mit einer Mooney-Viskosität (bei 100°C) von 15 bis 50 und flüssigem Ethylen-Propylen-Dien-Kautschuk umfasst, und
die Menge des flüssigen Ethylen-Propylen-Dien-Kautschukes 5 bis 40 Masseteile mit Bezug auf 100 Masseteile des nicht mit Öl gestreckten Ethylen-Propylen-Dien-Kautschukes beträgt.

5. Papiervorschubrolle nach Anspruch 1, wobei

die Kautschukkomponente (4) das Gemisch aus nicht mit Öl gestrecktem Ethylen-Propylen-Dien-Kautschuk mit einer Mooney-Viskosität (bei 100°C) von 15 bis 50 und Polybuten umfasst, und
die Menge des Polybutens 5 bis 40 Masseteile mit Bezug auf 100 Masseteile des nicht mit Öl gestreckten Ethylen-Propylen-Dien-Kautschukes beträgt.

6. Papiervorschubrolle nach Anspruch 1, wobei die Menge des Vernetzungsmittels 1 bis 4 Masseteile mit Bezug auf 100 Masseteile des nicht mit Öl gestreckten Ethylen-Propylen-Dien-Kautschukes beträgt.

7. Papiervorschubrolle nach Anspruch 1, wobei die Menge des Füllstoffes 1 bis 7 Masseteile mit Bezug auf 100 Masseteile des nicht mit Öl gestreckten Ethylen-Propylen-Dien-Kautschukes beträgt.

8. Papiervorschubrolle nach Anspruch 1, wobei das Vernetzungsmittel ein Peroxidvernetzungsmittel ist.

9. Papiervorschubrolle nach Anspruch 1, wobei

der Rollenkörper mit einem Durchgansloch in seiner Mitte versehen ist, und
die Papiervorschubrolle darüber hinaus eine Welle umfasst, die in das Durchgangsloch des Rollenkörpers eingesetzt ist.

**Revendications**

1. Rouleau d'alimentation papier, comprenant un corps de rouleau fabriqué en une substance réticulée d'une composition de caoutchouc contenant un composant caoutchouc, un agent de réticulation et une charge, dans lequel

le composant caoutchouc consiste en au moins un type unique choisi dans le groupe consistant en :

(1) un caoutchouc éthylène-propylène-diène non étendu à l'huile, ayant une viscosité Mooney (à 100°C), mesurée selon les normes industrielles japonaises JIS K 6300-1, de 15 à 50 ;
(2) un mélange d'un caoutchouc éthylène-propylène-diène non étendu à l'huile, ayant une viscosité Mooney (à 100°C) de 15 à 50, et d'une huile en une quantité non-supérieure à 10 parties en masse pour 100 parties en masse du caoutchouc éthylène-propylène-diène non étendu à l'huile ;
(3) un mélange d'un caoutchouc éthylène-propylène-diène non étendu à l'huile, ayant une viscosité Mooney (à 100°C) de 15 à 50, et de 5 à 20 parties en poids d'un caoutchouc éthylène-propylène-diène liquide ; et
(4) un mélange d'un caoutchouc éthylène-propylène-diène non étendu à l'huile, ayant une viscosité Mooney (à 100°C) de 15 à 50 et de 5 à 20 parties en poids de polybutène, et

la teneur en la charge-étant inférieure à 10 parties en masse pour 100 parties en masse du caoutchouc éthylène-propylène-diène non étendu à l'huile de l'un quelconque des points (1) à (4).

2. Rouleau d'alimentation papier selon la revendication 1, dans lequel la viscosité Mooney du caoutchouc éthylène-propylène-diène non étendu à l'huile est de 20 à 30.

**3.** Rouleau d'alimentation papier selon la revendication 1, dans lequel

le composant caoutchouc comprend (2) le mélange du caoutchouc éthylène-propylène-diène non étendu à l'huile ayant une viscosité Mooney (à 100°C) de 15 à 50, et d'une huile en une quantité non-supérieure à 10 parties en masse pour 100 parties en masse du caoutchouc éthylène-propylène-diène non étendu à l'huile, et la quantité de l'huile n'étant pas inférieure à 1 partie en masse pour 100 parties en masse du caoutchouc éthylène-propylène-diène non étendu à l'huile.

**4.** Rouleau d'alimentation papier selon la revendication 1, dans lequel

le composant caoutchouc comprend (3) le mélange d'un caoutchouc éthylène-propylène-diène non étendu à l'huile ayant une viscosité Mooney (à 100°C) de 15 à 50, et d'un caoutchouc éthylène-propylène-diène liquide, et la quantité du caoutchouc éthylène-propylène-diène liquide étant de 5 à 40 parties en masse pour 100 parties en masse du caoutchouc éthylène-propylène-diène non étendu à l'huile.

**5.** Rouleau d'alimentation papier selon la revendication 1, dans lequel

le composant caoutchouc comprend (4) le mélange d'un caoutchouc éthylène-propylène-diène non étendu à l'huile ayant une viscosité Mooney (à 100°C) de 15 à 50 et de polybutène, et
la quantité du polybutène étant de 5 à 40 parties en masse pour 100 parties en masse du caoutchouc éthylène-propylène-diène non étendu à l'huile.

**6.** Rouleau d'alimentation papier selon la revendication 1, dans lequel la quantité de l'agent de réticulation est de 1 à 4 parties en masse pour 100 parties en masse du caoutchouc éthylène-propylène-diène non étendu à l'huile.

**7.** Rouleau d'alimentation papier selon la revendication 1, dans lequel la quantité de la charge est de 1 à 7 parties en masse pour 100 parties en masse du caoutchouc éthylène-propylène-diène non étendu à l'huile.

**8.** Rouleau d'alimentation papier selon la revendication 1, dans lequel l'agent de réticulation est un agent de réticulation de type peroxyde.

**9.** Rouleau d'alimentation papier selon la revendication 1, dans lequel

le corps de rouleau est pourvu d'un trou traversant en son centre, et
le rouleau d'alimentation papier comprend en outre un axe inséré dans le trou traversant du corps de rouleau.

FIG. 1

**EP 2 395 051 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003261728 A
- JP 2004010322 A
- EP 0564267 A2
- US 20060199909 A1